# FASCICULE DE BREVET EUROPEEN

(11) **EP 1 967 270 B1**
(45) Date de publication et mention de la délivrance du brevet: **17.08.2011**
(21) Numéro de dépôt: 08300043.0
(22) Date de dépôt: 22.01.2008
(51) Int. Cl.: B01L 9/00, B01L 9/04, G01N 25/08, G01N 25/10, G01N 25/14, G01N 33/28

(54) **Dispositif de positionnement et d'alignement d'un ballon de distillation dans un appareil de distillation**
Positionier- und Ausrichtungsvorrichtung für einen Destillierkolben in einem Destilliergerät
Device for positioning and aligning a distillation flask in a distilling device

(30) Priorité: 13.02.2007 FR 0753226
(43) Date de publication de la demande: 10.09.2008
(73) Titulaire: Instrumentation Scientifique de Laboratoire ISL, 14790 Verson (FR)
(72) Inventeur: Marie, Patrick, 14980 Rots (FR)
(74) Mandataire: Livet, Marie-José

(56) Documents cités:
- EP-A1- 0 538 186
- WO-A-02/26387
- FR-A1- 2 410 818
- FR-A1- 2 815 413
- US-A- 3 364 731
- US-A- 4 250 739

## Description

La présente invention a pour objet un dispositif de positionnement et d'alignement d'un ballon de distillation dans un appareil de distillation automatique sous pression d'échantillons liquides en particulier d'échantillons de produits pétroliers.

Un tel appareil de distillation permet d'effectuer la mesure des paramètres de distillation de ces échantillons en respectant une norme prédéfinie choisie plusieurs normes possibles.

Il est connu que les caractéristiques de distillation des produits pétroliers sont représentatives des performances de ces produits ainsi que des risques qu'ils peuvent faire encourir à leurs utilisateurs.

La détermination de ces caractéristiques présente notamment une grande importance dans le cas de carburants destinés à l'industrie automobile ou à l'aviation où les problèmes liés à la sécurité sont primordiaux.

Ces caractéristiques sont en particulier des tables ou des courbes représentant le pourcentage d'un échantillon évaporé selon la température pendant une distillation, ou encore le volume du résidu et les pertes.

Les spécialistes peuvent déduire de ces caractéristiques quel sera le comportement d'un produit pétrolier donné dans une situation donnée, et donc déterminer si ce produit peut ou non être utilisé en toute sécurité, ce de manière à obtenir les performances recherchées.

Dans ce contexte, les spécialistes ont édicté différentes normes qui définissent très précisément les conditions dans lesquelles doivent être obtenues de telles caractéristiques de distillation.

Par suite, pour donner des résultats exploitables, les distillations doivent être mises en oeuvre en respectant scrupuleusement ces normes.

Il existe actuellement sur le marché différents appareils de distillation automatique permettant d'effectuer la mesure des paramètres de distillation d'un échantillon liquide en respectant une norme prédéfinie choisie parmi plusieurs normes possibles auxquelles est adapté cet appareil de distillation.

Les appareils de distillation normalisés actuellement proposés sur le marché comportent en règle générale :
- un bâti fixe,
- une enceinte de chauffage renfermant un élément calorifique, notamment une résistance chauffante,
- une série de ballons de distillation correspondant respectivement à au moins l'une des normes possibles, la colonne de ces ballons pouvant être fermée par un bouchon d'obturation étanche muni d'un thermomètre permettant de mesurer la température des vapeurs évaporées et comportant une branche latérale destinée à être branchée sur un tube condenseur relié à un cylindre collecteur permettant de recueillir le condensât,
- une série de plaques isolantes destinées à être montées au-dessus de l'élément calorifique pour fermer l'enceinte de chauffage à sa partie supérieure, et équipées, chacune, d'une ouverture centrale ayant une géométrie adaptée à celle des différents ballons de distillation de façon à leur permettre de prendre appui sur ces plaques, et
- des moyens de commande et de régulation permettant de commander et de faire varier dans le temps une grandeur de fonctionnement de l'élément calorifique, notamment la température ou la puissance électrique de cet élément de manière à obtenir des paramètres de distillation conformément à la norme prédéfinie choisie.

Pour effectuer la distillation d'un échantillon liquide en utilisant un tel appareil, l'utilisateur doit tout d'abord effectuer le choix d'une norme puis introduire une quantité prédéterminée d'échantillon à analyser dans le ballon de distillation correspondant à cette norme.

Il doit ensuite positionner l'élément calorifique et la plaque isolante sous le ballon de distillation ainsi rempli de l'échantillon, de façon à ce que l'ouverture centrale de la plaque isolante s'appuie contre le fond de ce ballon ; l'élément calorifique lié à la plaque isolante se retrouve ainsi positionné dans une position définie et répétable.

Pour garantir que la distillation soit effectuée en respectant scrupuleusement la norme prédéfinie préalablement choisie, il est nécessaire que le ballon de distillation soit parfaitement positionné et aligné verticalement et en hauteur par rapport au bâti de l'appareil de distillation.

Or, dans les appareils de distillation normalisés actuellement proposés sur le marché, le ballon de distillation est simplement posé sur la plaque isolante associée et branché sur le tube condenseur, ce sans être aucunement maintenu dans cet appareil.

Il en résulte des risques de positionnement et d'alignement approximatifs pouvant entraîner une dénaturation des caractéristiques de distillation obtenues.

La présente invention a pour objet de proposer un dispositif de positionnement et d'alignement d'un ballon de distillation dans un appareil de distillation automatique normalisé du type susmentionné de nature à remédier à cet inconvénient.

Selon l'invention, un tel dispositif est caractérisé en ce qu'il comporte une butée articulée montée solidairement sur le bâti de l'appareil de distillation et coopérant avec un embout de couplage essentiellement sphérique fixé sur le bouchon d'obturation et susceptible de s'encliqueter à la partie interne de la butée articulée.

On obtient ainsi une articulation de type rotule permettant de suspendre le ballon de distillation, lié au bouchon d'obturation à un support solidaire du bâti de l'appareil de distillation dans une position quasi verticale.

Lors de la mise en place du ballon et du bouchon sur le support, le bras latéral du ballon est introduit simultanément dans le tube condenseur.

Selon une autre caractéristique de l'invention, l'enceinte de chauffage est mobile en translation verticale entre d'une part une position basse ou position de montage et de repos et d'autre part une position haute ou position de travail dans laquelle le ballon de distillation est maintenu en appui contre la plaque isolante.

Cette mobilité de l'enceinte de chauffage correspond à une caractéristique particulièrement avantageuse dans la mesure où elle facilite dans une large mesure le montage d'un ballon dans l'appareil de distillation.

En effet, lors du mouvement de montée, l'ouverture centrale de la plaque isolante, de par sa forme adaptée, achève la mise en ligne, verticale, du ballon.

Une force de poussée constante est appliquée jusqu'à ce que le ballon et son bouchon soient maintenus fermement et verticalement entre le support et la plaque isolante.

Selon l'invention, la plaque isolante est de préférence maintenue élastiquement contre le fond du ballon de distillation en position de travail.

Ce montage élastique de la plaque isolante permet de la désolidariser de l'enceinte de chauffage en position de montage et de repos de façon à permettre à de l'air de circuler alors autour de celle-ci.

Ce montage particulier permet de réduire le temps de refroidissement de la plaque isolante et par suite de diminuer le temps nécessaire entre deux essais dans la mesure où il faut toujours attendre que la plaque isolante soit refroidie avant d'entreprendre une nouvelle distillation.

Selon une autre caractéristique de l'invention, l'enceinte de chauffage est équipée à sa partie inférieure d'un montant de transfert coopérant avec des organes de guidage au cours de son déplacement entre la position de montage et de repos et la position de travail.

Une telle configuration est de nature à faciliter dans une large mesure le déplacement de l'enceinte de chauffage.

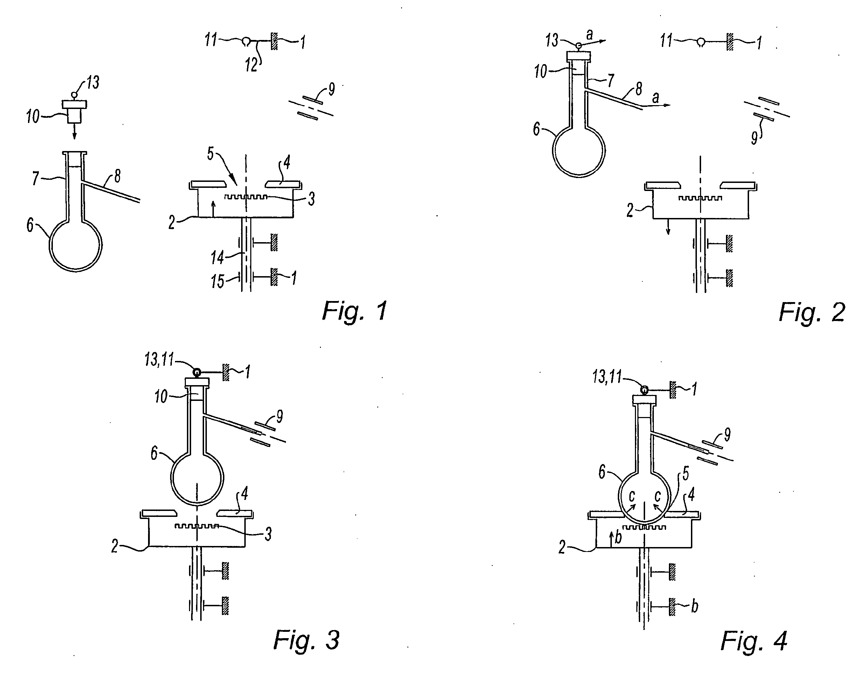

Les caractéristiques du dispositif de positionnement et d'alignement qui fait l'objet de l'invention seront décrites plus en détail en se référant aux dessins non limitatifs annexés dans lesquels les figures 1 à 4 sont des schémas illustratifs des différentes étapes du processus de mise en place d'un ballon de distillation dans un appareil de distillation normalisé conforme à l'invention.

Selon la figure 1, l'appareil de distillation normalisé qui est représenté schématiquement comporte un bâti 1 sur lequel est montée une enceinte de chauffage 2 renfermant un élément calorifique 3 et fermée à sa partie supérieure par une plaque isolante 4.

Cette plaque isolante 4 est munie d'une ouverture centrale 5 destinée à recevoir le fond d'un ballon de distillation 6 dont la colonne 7 comporte une branche latérale 8 destinée à être branchée sur un tube condenseur 9 solidaire du bâti 1 de l'appareil de distillation et dont seule l'extrémité libre est représentée sur les figures.

Un bouchon d'obturation étanche 10 permet de fermer la colonne 7 du ballon de distillation 6 à sa partie supérieure.

Le bâti 1 de l'appareil de distillation est en outre équipé d'un support 12 à l'extrémité duquel se trouve une butée articulée 11 montée solidairement sur celui-ci, dans une position prédéfinie.

Le bouchon d'obturation 10 du ballon de distillation 6 est quant à lui équipé d'un embout de couplage 13 essentiellement sphérique conçu de façon à pouvoir s'encliqueter à la partie interne de la butée articulée 11 fixée sur le bâti 1 de l'appareil de distillation.

L'enceinte de chauffage 2 est mobile en translation verticale par rapport au bâti 1 de l'appareil de distillation entre une position basse ou position de montage et de repos représentée sur les figures 1, 2 et 3 et une position haute ou position de travail représentée sur la figure 4.

Pour faciliter son déplacement entre ces deux positions, l'enceinte de chauffage 2 est équipée à sa partie inférieure d'un montant de transfert 14 qui coopère avec des organes de guidage 15.

La mise en place du ballon de distillation 6 sur le bâti 1 de l'appareil de distillation s'effectue de la façon suivante :
Selon la figure 2, après avoir introduit l'échantillon à analyser dans le ballon de distillation 6, l'utilisateur doit fermer la colonne 7 de ce ballon avec le bouchon d'obturation 10 et le déplacer selon les flèches a de façon à encliqueter l'embout de couplage 13 dans la butée articulée 11 et à brancher la branche latérale 8 sur le tube condenseur 9 comme représenté sur la figure 3.
Selon la figure 3, le ballon de distillation 6 est ainsi maintenu à sa partie supérieure par l'embout de couplage 13 encliqueté dans la butée articulée 11, au-dessus de l'enceinte de chauffage 2, ce sans être aligné par rapport à cette enceinte.
Selon la figure 4, l'utilisateur doit ensuite déplacer l'enceinte de chauffage 2 vers le haut en position de travail comme schématisé par la flèche b.
Au cours de ce déplacement, le fond du ballon 6 se trouve automatiquement guidé au centre dans l'ouverture 5 de la plaque isolante 4, comme schématisé par les flèches c, du fait de la forme de cette ouverture 5 dans la plaque isolante 4.
Le ballon de distillation 6 est ainsi parfaitement positionné dans le bâti 1 de l'appareil de distillation et aligné verticalement dans celui-ci.

## Revendications

1. Dispositif de positionnement et d'alignement d'un ballon de distillation dans un appareil de distillation automatique sous pression atmosphérique d'échantillons liquides, en particulier d'échantillons de produits pétroliers permettant d'effectuer la mesure des paramètres de distillation de ces échantillons, en respectant une norme prédéfinie choisie parmi plusieurs normes possibles, cet appareil de distillation normalisé comportant :
- un bâti fixe,
- une enceinte de chauffage renfermant un élément calorifique notamment une résistance chauffante,
- une série de ballons de ballon de distillation correspondant respectivement à au moins l'une des normes possibles, la colonne de ces ballons pouvant être fermée par un bouchon d'obturation étanche muni d'un thermomètre permettant de mesurer la température des vapeurs évaporées et comportant une branche latérale destinée à être branchée sur un tube condenseur relié à un cylindre collecteur permettant de recueillir le condensât,
- une série de plaques isolantes destinées à être montées au-dessus de l'élément calorifique pour fermer l'enceinte de chauffage à sa partie supérieure, et équipées, chacune, d'une ouverture centrale ayant une géométrie adaptée aux fonds des différents ballons de distillation de façon à leur permettre de prendre appui sur ces plaques, et
- des moyens de commande et de régulation permettant de commander et de faire varier dans le temps une grandeur de fonctionnement de l'élément calorifique, notamment la température ou la puissance électrique de cet élément de manière à obtenir des paramètres de distillation conformément à la norme prédéfinie choisie,
**caractérisé en ce qu'**il
comporte une butée articulée (11) montée solidairement sur le bâti (1) de l'appareil de distillation et coopérant avec un embout de couplage (13) essentiellement sphérique fixé sur le bouchon d'obturation (10) et susceptible de s'encliqueter à la partie interne de la butée articulée (11).

2. Dispositif selon la revendication 1,
**caractérisé en ce que**
l'enceinte de chauffage (2) est mobile en translation verticale entre d'une part une position basse ou position de montage et de repos et d'autre part une position haute ou position de travail dans laquelle le ballon de distillation (6) est maintenu en appui contre la plaque isolante (4) associée.

3. Dispositif selon la revendication 2,
**caractérisé en ce que**
la plaque isolante (4) est maintenue élastiquement contre le fond du ballon de distillation (6) en position de travail.

4. Dispositif selon l'une quelconque des revendications 2 et 3,
**caractérisé en ce que**
l'enceinte de chauffage (2) est équipée à sa partie inférieure d'un montant de transfert (14) coopérant avec des organes de guidage (15) au cours de son déplacement entre la position de montage et de repos et la position de travail.

## Claims

1. Device for positioning and aligning a distillation flask in an apparatus for the automatic distillation of liquid samples, in particular samples of petroleum products, under atmospheric pressure, allowing distillation parameters of the samples to be measured and a predefined standard selected from a plurality of possible standards to be complied with, the standardised distillation apparatus comprising:
- a fixed support member,
- a heating enclosure containing a heat-generating element, especially a heating resistor,
- a series of distillation flasks each corresponding to at least one of the possible standards, wherein the neck of the flasks can be closed by a tight stopper provided with a thermometer with which the temperature of the evaporated vapours can be measured, and has a side arm which is to be connected to a condenser pipe connected to a collector cylinder which allows the condensate to be collected,
- a series of insulating plates which are to be mounted above the heat-generating element in order to close the heating enclosure in its upper portion, each insulating plate being equipped with a central opening of a size adapted to the bottoms of the various distillation flasks in order to allow them to be supported on the plates, and
- control and regulating means which allow an operating parameter of the heat-generating element, especially the temperature or electric power of the element, to be controlled and varied over time in order to obtain distillation parameters in compliance with the chosen predefined standard,
**characterised in that**
it comprises an articulated stop (11) which is integrally mounted on the support member (1) of the distillation apparatus and cooperates with a substantially spherical coupling end-piece (13) which is fixed to the stopper (10) and is capable of engaging into the inner portion of the articulated stop (11).

2. Device according to claim 1,
**characterised in that**
the heating enclosure (2) is movable in vertical translation between on the one hand a bottom position or mounting and rest position and on the other hand a top position or working position in which the distillation flask (6) is supported on the associated insulating plate (4).

3. Device according to claim 2,
**characterised in that**
the insulating plate (4) is held resiliently against the bottom of the distillation flask (6) in the working position.

4. Device according to either claim 2 or claim 3,
**characterised in that**
the heating enclosure (2) is equipped in its lower portion with a vertical transfer member (14) which cooperates with guide members (15) during its displacement between the mounting and rest position and the working position.

## Patentansprüche

1. Positionier- und Ausrichtungsvorrichtung für einen Destillierkolben in einem automatischen Destillationsgerät für flüssige Proben unter Atmosphärendruck, insbesondere von Proben von Mineralölprodukten, mit der unter Beachtung einer vorgegebenen, unter mehreren möglichen Normen ausgewählten Norm die Messung der Destillationsparameter dieser Proben durchgeführt werden kann, wobei dieses genormte Destillationsgerät Folgendes aufweist:
- einen ortsfesten Ständer,
- eine Kammer zum Erhitzen, die ein Heizelement, insbesondere einen Heizwiderstand enthält,
- einen Satz Kolben alls Destillierkolben, die jeweils wenigstens einer der möglichen Normen entsprechen, wobei die Kolonne dieser Kolben durch einen dicht schließenden Verschlussstopfen verschlossen werden kann, der mit einem Thermometer versehen ist, mit dem die Temperatur der entstehenden Dämpfe gemessen werden kann, und die ein Seitenrohr aufweisen, das dazu bestimmt ist, in ein mit einem das Kondensat auffangenden Sammelzylinder verbundenes Kondensatorrohr gesteckt zu werden,
- einen Satz isolierender, zur Anbringung über dem Heizelement vorgesehener Platten, um die Heizkammer in ihrem oberen Teil zu verschließen, die jeweils mit einer zentralen, eine an den unteren Teil der verschiedenen Destillierkolben angepasste Geometrie aufweisenden Öffnung versehen sind, damit sie auf diesen Platten ruhen können, und
- Steuerungs- und Regelungsmittel, mit denen eine Betriebsgröße des Heizelements geregelt werden kann und sich in der Zeit verändern lässt, insbesondere die Temperatur oder die elektrische Leistung dieses Elements, um Destillationsparameter zu erhalten, die der gewählten vorgegebenen Norm entsprechen,
**dadurch gekennzeichnet,**
**dass** sie ein fest am Ständer (1) des Destillationsgeräts angebrachtes gelenkiges Widerlager (11) aufweist, das mit einem im wesentlichen kugelförmigen, auf dem Verschlussstopfen (10) befestigten Kupplungsaufsatz (13) zusammenarbeitet, der ins Innere des gelenkigen Widerlagers (11) eingerastet werden kann.

2. Vorrichtung nach Anspruch 1, **dadurch gekennzeichnet, dass** die Kammer zum Erhitzen (2) vertikal zwischen einerseits einer unteren Position oder Montage- und Ruheposition und andererseits einer oberen Position oder Arbeitsposition verstellt werden kann und in letzterer Position der Destillierkolben (6), auf der zugehörigen isolierenden Platte (4) aufliegend, gehalten ist.

3. Vorrichtung nach Anspruch 2, **dadurch gekennzeichnet, dass** die isolierende Platte (4) in der Arbeitsposition elastisch am unteren Teil des Destillierkolbens (6) gehalten ist.

4. Vorrichtung nach einem der Ansprüche 2 und 3, **dadurch gekennzeichnet, dass** die Kammer zum Erhitzen (2) an ihrem unteren Teil mit einer Verstellstütze (14) versehen ist, die während ihrer Verschiebung zwischen der Montage- und Ruheposition und der Arbeitsposition mit Führungselementen (15) zusammenarbeitet.
